# EUROPEAN PATENT APPLICATION

(11) **EP 2 857 359 A1**
(43) Date of publication of application: **08.04.2015**
(21) Application number: 13800149.0
(22) Date of filing: 31.05.2013
(51) Int. Cl.: C02F 1/44, B01D 63/12

(54) **SEPARATION MEMBRANE UNIT AND DESALINATION METHOD USING SAME**

(30) Priority: 04.06.2012 JP 2012126849
(71) Applicant: Toray Industries, Inc., Tokyo 103-8666 (JP)
(72) Inventor: TANIGUCHI, Masahide, Otsu-shi Shiga 520-8558 (JP); TOMIOKA, Kazunori, Otsu-shi Shiga 520-8558 (JP); MAEDA, Tomohiro, Otsu-shi Shiga 520-8558 (JP)
(74) Representative: Hoefer & Partner
(86) International application number: PCT/JP2013/065161
(87) International publication number: WO 2013/183553

(57) **Abstract**

There is provided a separation membrane unit that prevents contamination of the separation membrane unit and that fully exploits the performance of the separation membranes while reducing maintenance time and labor, and a method for producing fresh water. The unit is characterized in that a plurality of separation membrane subunits (11a-c) communicate with raw water lines A (9a-c) that comprise raw water supply valves W (10a-c), water discharge lines B (12a-c) that comprise water discharge valves X (13a-c), raw water lines C (16a-c) that comprise first raw water communication valves Y (17a-c), raw water lines D (19a-c) that comprise second raw water communication valves Z (20a-c), and permeate water lines E (21a-c); and that the raw water lines A communicate with the water discharge lines B, the raw water lines C communicate with the raw water lines D, the raw water lines A communicate with a main raw water line 7, the water discharge lines B communicate with a main water discharge line 14, the raw water lines C and the raw water lines D communicate with a collection line 18, and the permeate water lines E communicate with a main permeate water line 22.

## Description

### Technical Field

The present invention relates to a separation membrane unit for separating and removing a substance present in water-to-be-treated and a method for using such unit to produce fresh water.

### Background Art

In recent years, fluid separation technologies using various separation membranes such as a gas separation membrane, a reverse osmosis membrane, a nanofiltration membrane, an ultrafiltration membrane, a microfiltration membrane, and the like have received attention as a fine and energy saving process, and the application of such technologies to treatment of various fluids has been promoted. For example, in a reverse osmosis separation process using a reverse osmosis membrane, a solution containing a solute such as salt is allowed to permeate the reverse osmosis membrane at a pressure above the osmotic pressure of the solution, thereby yielding a liquid that has a reduced concentration of the solute such as salt. For example, the process is widely used for desalination of seawater and brine water, production of ultrapure water, concentration and recovery of a valuable material, and the like.

For efficient operation of such separation membrane, contamination of the membrane surface, which is called fouling, is the most significant problem. This is a process in which impurities contained in water-to-be-treated deposit or adsorb onto a membrane surface and a separation membrane channel, thereby degrading the performance of the separation membrane. To prevent the fouling, measures are taken, including pretreatment by filtration and the like to preliminarily remove the impurities, and generation of turbulence in separation membrane module channels to reduce the tendency to deposit the impurities. When a membrane is contaminated despite such measures, a method for rejuvenating the membrane such as washing the membrane with chemicals is applied. However, if the pretreatment is insufficient and/or a large amount of impurities are contained, invasion of materials that cause fouling into the separation membrane is often not prevented. The washing process usually requires shutdown, and thus it is preferred not to wash a membrane with chemicals if possible, in view of the cost of the chemicals and degradation of separation membranes due to the chemicals. Thus, procedures called physical washing are often applied before the need for washing with chemicals, the procedures including a flushing process in which raw water-to-be-treated or permeate water is fed at the raw water side of a membrane at a high flow rate, a backwashing process in which pressure is applied onto the permeate side of a membrane to move the permeate water backward toward the raw water side of the membrane to float and remove deposited foulants.

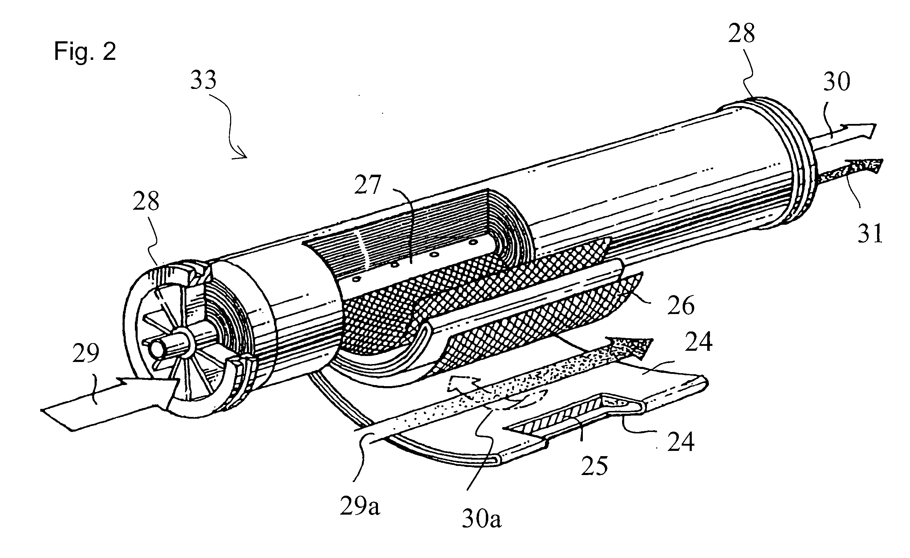

A separation membrane has various configurations such as a flat sheet configuration, a tubular configuration, and a hollow fiber configuration. In the case of a flat sheet membrane, the membrane is often used in the form of a spiral-wound membrane element. In one known structure, as illustrated in Patent Documents 1 and Fig. 2 for example, a conventional spiral-wound membrane element includes one or more laminates of a separation membrane 24, a feed side channel material 26, and a permeate side channel material 25, the laminates being wound around a perforated center tube 27, and an anti-telescoping plate 28 attached to the both ends.

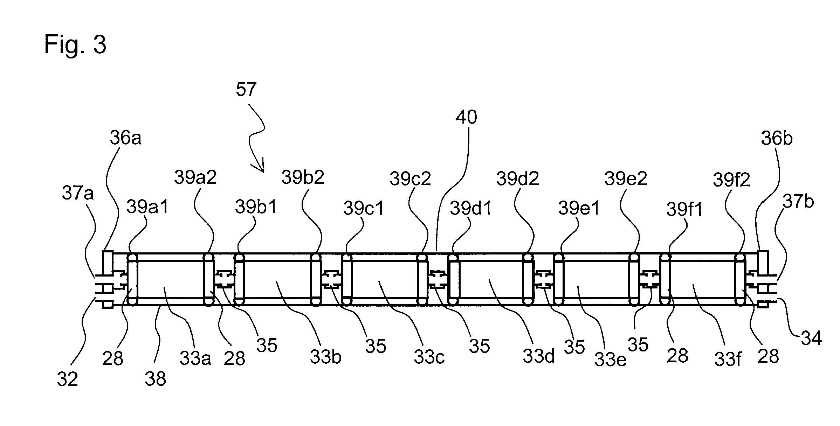

In such separation membrane element, water-to-be-treated (raw water) 29 is fed at one of the end surfaces, and then water-to-be-treated 29a flows along the feed side channel material 26 to pass part of the ingredients (for example, water in the case of desalination of seawater) through the separation membrane 24, thereby separating the raw water. Then, the ingredient that has passed through the separation membrane (permeate water 30a) flows along the permeate side channel material 25 into the center tube 27 through holes in a side of the tube, then passes through the center tube 27, and exits from other end surface of the separation membrane element to be collected as permeate water 30. On the other hand, the treated water that remains flowing along the feed side channel material 26 and that contains a high concentration of a non-permeate ingredient (salt in the case of desalination of seawater) is collected from the other end surface of the separation membrane element as concentrated water 31. Such separation membrane element has an advantage of tending to reduce channeling due to uniform distribution of channels for water-to-be-treated, but if pretreatment is insufficient, there is a problem of tending to deposit foulants on the end surface to which water-to-be-treated 29 is fed. Particularly, in the spiral-wound membrane element, usually a plurality of separation membrane elements 33a-33f are often disposed in series in a single cylindrical pressure vessel 40, as illustrated in Fig. 3. In this case, fouling as described above dominantly occurs in, especially, the first separation membrane element 33a. And, in the case of desalination of seawater, due to osmotic pressure, the first separation membrane element exhibits high permeation flux, because the element receives less concentrate stream, and tends to deposit foulants on the membrane surface, thereby promoting fouling. On the other hand, as the stream is concentrated, and then osmotic pressure increases, the last separation membrane element 33f has lower permeation flux and thus is less likely to cause fouling. On the contrary, a later separation membrane element has the property of receiving water-to-be-treated at a lower flow rate due to permeation through a prior element, and thus producing reduced flushing effect on the membrane surface, so foulants deposited on the membrane surface are difficult to remove from the membrane surface.

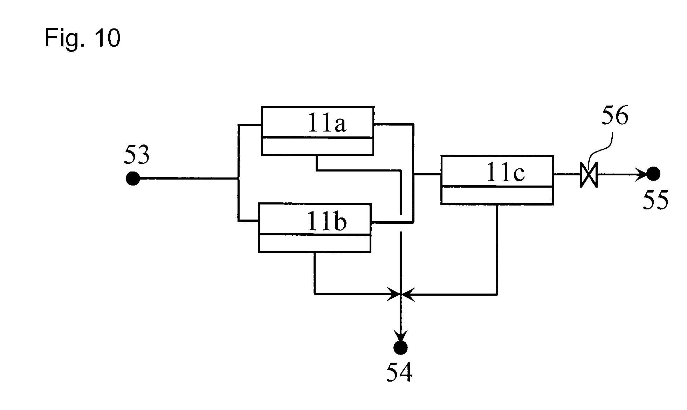

To maintain the flow rate of water-to-be-treated, a separation device often uses a configuration in which a plurality of separation membrane units 11a, 11b, and 11c are organized in a tree structure, as illustrated in Fig. 10, to decrease the number of the membrane elements in the unit 11 c in the later stage, for matching with the reduced flow rate, thereby maintaining the flow rate of the water fed to the separation membrane unit. In Fig. 10, water-to-be-treated 53 is fed to the separation membrane subunits 11a and 11b, which are arranged in parallel, and the concentrated water discharged from each of the subunits is fed to the separation membrane subunit 11c disposed downstream. Permeate water 54 produced by each of the separation membrane subunits 11a, 11b, and 11c is joined for use, while concentrated water 55 discharged from the separation membrane subunit 11c exits from the device through a valve 56.

In view of the foregoing problems and characteristics, for example, Patent Document 1 proposes a method of periodically feeding permeate water from a concentrated water outlet to flush the permeate water in the opposite direction to the flow of water-to-be-treated. The method allows removal of foulants depositing on the end of a separation membrane element by the force of the flow of water in the opposite direction, and allows removal of foulants depositing on later separation membrane elements, which receive water-to-be-treated at a lower flow rate during operation and thus produce reduced flushing effect on the membrane surface. And Patent Document 2 proposes a method of reversing the flow direction of water-to-be-treated during operation to remove foulants depositing on the surface of a separation membrane, with little downtime. As illustrated in Patent Document 3, such method is also applied to a case in which a plurality of separation membrane unit components are organized in a tree structure.

However, these methods usually requires shutdown for removing foulants and requires maintenance time and labor, and thus there has existed a need for more efficiently preventing fouling while maintaining longer operating time.

### Prior Art Documents

### Patent Documents

Patent Document 1: WO 2009/128328
Patent Document 2: Japanese Unexamined Patent Application Publication No. 2004-141846
Patent Document 3: Japanese Unexamined Patent Application Publication No. 2004-261724

### Summary of the Invention

### Problems to be Solved by the Invention

The present invention provides a separation membrane unit that prevents contamination of the separation membrane unit and that fully exploits the performance of the separation membranes while reducing maintenance time and labor, and a method for using such unit to produce fresh water.

### Means of Solving the Problems

To solve the problems described above, the present invention includes the following aspects (1)-(8):
(1) A separation membrane unit including a plurality of separation membrane subunits that include at least one separation membrane module including a plurality of separation membrane elements disposed in a cylindrical pressure vessel, wherein each of the separation membrane subunits communicates with a raw water line A that includes a raw water supply valve W, a water discharge line B that includes a water discharge valve X, a raw water line C that includes a first raw water communication valve Y, a raw water line D that includes a second raw water communication valve Z, and a permeate water line E, and wherein, for each of the separation membrane subunits, the raw water line A communicates with the water discharge line B, the raw water line C communicates with the raw water line D, the raw water line A communicates with a main raw water line, the water discharge line B communicates with a main water discharge line, the raw water line C and the raw water line D communicate with a collection line, and the permeate water line E communicates with a main permeate water line.
(2) The separation membrane unit according to (1), wherein the separation membrane elements are a spiral-wound membrane element in which a cladding is wrapped around the outer surface of a wound laminate formed by winding a separation membrane together with a channel spacer, and in which an anti-telescoping plate is attached to at least one end of the wound laminate and the cladding, in which a raw water sealing material is disposed in the perimeter of at least one of the anti-telescoping plate to allow movement of the separation membrane element within the cylindrical pressure vessel substantially in either direction.
(3) The separation membrane unit according to (1) or (2), wherein the unit further includes a line for discharging water that has passed through the raw water line C from the device and/or for discharging water that has passed through the raw water line D from the unit.
(4) The separation membrane unit according to any of (1)-(3), wherein the collection line in communication with the raw water line C and the raw water line D includes a pressure pump.
(5) The separation membrane unit according to any of (1)-(4), wherein the main water discharge line includes a pressure energy recovery unit.
(6) A method for producing fresh water by using the separation membrane unit according to any of (1)-(5) to produce permeate water, wherein, for a separation membrane subunit group (M) that is constituted by part of the plurality of separation membrane subunits, the raw water supply valve W and the second raw water communication valve Z are completely closed, and the water discharge valve X and the first raw water communication valve Y are opened, and, for a separation membrane subunit group (N) that is constituted by the remaining separation membrane subunit(s), the raw water supply valve W and the second raw water communication valve Z are opened, and the water discharge valve X and the first raw water communication valve Y are completely closed to feed raw water to the separation membrane subunit group (N) through the main raw water line and the raw water line A connected to the separation membrane subunit group (N), wherein the permeate water is discharged through the permeate water line E connected to the separation membrane subunit group (N) and the main permeate water line, wherein an intermediate concentrated water is discharged through the raw water line D connected to the separation membrane subunit group (N), and then the intermediate concentrated water is fed to the separation membrane subunit group (M) through the collection line and the raw water line C connected to the separation membrane subunit group (M), wherein the permeate water is discharged through the permeate water line E connected to the separation membrane subunit group (M) and the main permeate water line, and wherein the concentrated water is discharged through the water discharge line B connected to the separation membrane subunit group (M) and the main water discharge line.
(7) The method for producing fresh water according to (6), wherein a separation membrane subunit that constitutes the separation membrane subunit group (N) is sequentially changed among the plurality of separation membrane subunits.
(8) The method for producing fresh water according to (6) or (7), wherein the total membrane area of separation membranes in the separation membrane subunit group (M) is smaller than the total membrane area of separation membranes in the separation membrane subunit group (N).

### Effects of the Invention

In the present invention, separation membrane elements constitute at least two subunits; the intermediate concentrated water discharged from the first subunit group (N) is fed to the other subunit group (M) in the opposite feed direction; and the separation membrane subunits that constitute the subunit group (N) to which raw water is first fed are sequentially changed, thereby allowing inhibition of contamination of the separation membrane unit with no or little need for downtime of the separation membrane unit, allowing the use of the separation membranes to be balanced, and allowing effective prevention of fouling while maintaining a high operation rate. Thus, the present invention can provide a separation membrane unit that prevents contamination of the separation membrane unit using spiral-wound membrane elements and that fully exploits the performance of the separation membranes while reducing maintenance time and labor, and a method for using such unit to produce fresh water.

### Brief Description of the Drawings

Fig. 1 is a flow diagram that illustrates an example of an embodiment of a device for producing fresh water, the device including the separation membrane unit according to the present invention.
Fig. 2 is a partial cut-away perspective view of an example of an embodiment of a spiral-wound membrane element constituting the present invention.
Fig. 3 is a cross-sectional view of an example of a separation membrane module that includes a plurality of spiral-wound membrane elements disposed in a cylindrical pressure vessel, as a separation membrane subunit constituting the present invention.
Fig. 4 is a schematic partial enlarged cross-sectional view of the area near the section of a U-cup seal installed in an anti-telescoping plate of a separation membrane element disposed in a pressure vessel.
Fig. 5 is a schematic partial enlarged cross-sectional view of the area near the section of an O-ring seal installed in an anti-telescoping plate of a separation membrane element is disposed in a pressure vessel.
Fig. 6 (a) is a schematic plan view of an example of a non-elastomeric sealing material in the form of a split ring, and Fig. 6 (b) is a cross-sectional view taken along the line b-b in Fig. 6 (a).
Figs. 7 (a), (b), and (c) illustrate an example of the configuration of a gap in a sealing material in the form of a split ring.
Fig. 8 is a flow diagram that illustrates another example of an embodiment of a device for producing fresh water, the device including the separation membrane unit according to the present invention.
Fig. 9 is a flow diagram that illustrates still another example of an embodiment of a device for producing fresh water, the device including the separation membrane unit according to the present invention.
Fig. 10 illustrates an example of the configuration of a separation membrane unit that includes a plurality of subunits organized in a tree structure to reduce the number of later membrane elements.

### Mode for Carrying out the Invention

Now, embodiments of the present invention will be described with reference to the drawings, although the present invention is not limited to the embodiments illustrated in the drawings.

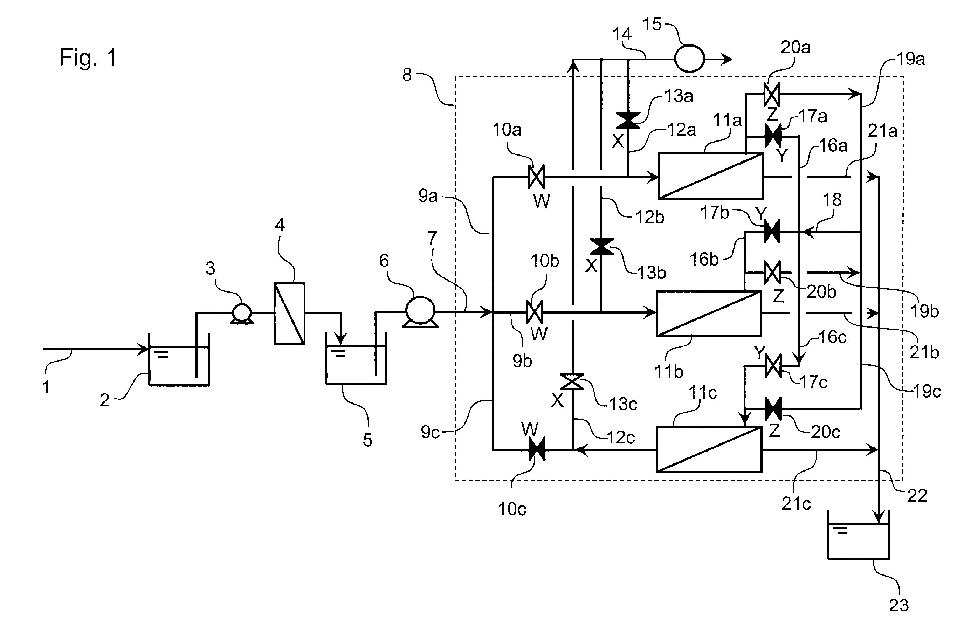

Fig. 1 is a flow diagram that illustrates an example of an embodiment of a device for producing fresh water, the device including the separation membrane unit of the present invention.

In Fig. 1, raw water 1 is fed to a raw water tank 2, and then pumped by a raw water feed pump 3. After treatment by a pretreatment unit 4, where necessary, the water is stored in a pretreated water tank 5. The pretreated water is fed through a main raw water line 7 to a separation membrane unit 8 by a pressure pump 6. The separation membrane unit 8 includes a plurality of separation membrane subunits 11a, 11b, and 11c, and each of the separation membrane subunits communicates with a raw water line A (9a, 9b, or 9c), a water discharge line B (12a, 12b, or 12c), a raw water line C (16a, 16b, or 16c), and a raw water line D (19a, 19b, or 19c).

The raw water lines A (9a, 9b, and 9c) respectively connect the main raw water lines 7 with one end of a water port of the separation membrane subunits 11a, 11b, and 11c (raw water inlet), and individually include a raw water supply valve W (10a, 10b, or 10c). The raw water lines A (9a, 9b, and 9c) respectively communicate with the water discharge lines B (12a, 12b, and 12c). The water discharge lines B (12a, 12b, and 12c) respectively connect the raw water lines A (9a, 9b, and 9c) with a main water discharge line 14, and individually include a water discharge valve X (13a, 13b, or 13c). The main water discharge line 14 can include a pressure energy recovery unit 15.

Each of the separation membrane subunits 11 a, 11b, and 11c is connected to a raw water line C and a raw water line D, via one end of a water port (concentrated water outlet) on the opposite side of the raw water inlet connected to the raw water line A. A raw water line connected to the concentrated water outlet of each of the separation membrane subunits 11 a, 11b, and 11 c is divided into the raw water line C and the raw water line D, and the other side of the lines C and D communicates with each other, via a collection line 18. In particular, the raw water lines C (16a, 16b, and 16c) respectively connect one end of the collection line 18 with the separation membrane subunits 11a, 11b, and 11c, while the raw water lines D (19a, 19b, and 19c) connect the other end of the collection line 18 with the raw water lines C. The raw water lines C (16a, 16b, and 16c) individually include a first raw water communication valve Y (17a, 17b, or 17c). The raw water lines D (19a, 19b, and 19c) individually include a second raw water communication valve Z (20a, 20b, or 20c).

Furthermore, a port for permeate water of each of the separation membrane subunits 11a, 11b, and 11c is connected to a permeate water line E (21a, 21b, or 21c), and the permeate water line E communicates with a permeate water tank 23 via a main permeate water line 22.

Now, a method for using the separation membrane unit of the present invention illustrated in Fig. 1 to produce fresh water. In the embodiment illustrated in Fig. 1, raw water is first fed to a separation membrane subunit group (N) constituted by part of the separation membrane subunits, and then treated by the subunit group (N). The intermediate concentrated water discharged from the subunit group (N) is fed to a separation membrane subunit group (M) constituted by the remaining separation membrane subunit, and then treated by the subunit group (M). In the illustrated example, the separation membrane subunits that constitute the subunit group (N) are the separation membrane subunits 11 a and 11b, while the separation membrane subunit that constitutes the subunit group (M) is the separation membrane subunit 11c. And opened valves are represented as a white mark, while completely closed valves are represented as a black mark. The flow direction of the raw water, the intermediate concentrated water, the concentrated water, and the permeate water is indicated by an arrow.

As described above, the raw water 1 is first fed to the raw water tank 2 and then pumped by the raw water feed pump 3. After treatment by the pretreatment unit 4, where necessary, the water is stored in the pretreated water tank 5. The raw water or pretreated water is pressurized by the pressure pump 6 to be fed through the main raw water line 7 to the separation membrane unit 8. In the separation membrane unit 8, the raw water supply valves W (10a and 10b) connected to the separation membrane subunits of the subunit group (N) are opened, the raw water supply valve W (10c) connected to the separation membrane subunit of the subunit group (M) is completely closed (in the figure, opened valves are represented as a white mark, while completely closed valves are represented as a black mark), the water discharge valves X (13a and 13b) connected to the separation membrane subunits of the subunit group (N) are completely closed, and the water discharge valve X (13c) connected to the separation membrane subunit of the subunit group (M) is opened to feed the pretreated water to the separation membrane subunits 11a and 11b and then to treat the water by the subunits 11a and 11b. The separation membrane subunit group (N) constituted by the separation membrane subunits 11a and 11b is used as a first system. The permeate water produced by the separation membrane subunits 11 a and 11b is fed through the permeate water lines E (21 a and 21b) and then the main permeate water line 22 to the permeate water tank 23 and is stored in the tank 23.

On the other hand, the concentrated water discharged from the separation membrane subunits 11a and 11b is fed through the raw water lines D (19a and 19b) and then the collection line 18, by completely closing the first raw water communication valves Y (17a and 17b), and opening the second raw water communication valves Z (20a and 20b). At the same time, the second raw water communication valve Z (20c) connected to the separation membrane subunit 11c is completely closed, and the first raw water communication valve Y (17c) is opened to feed the intermediate concentrated water that has passed through the collection line 18 to the separation membrane subunit 11c through the raw water line C (16c) and then to treat the water by the subunit 11c. In this way, the subunit group (M) constituted by the separation membrane subunit 11 c is used as a second system. The permeate water treated by the separation membrane subunit 11c is fed through the permeate water line E (21 c) and then the main permeate water line 22 to the permeate water tank 23 and is stored in the tank 23. The concentrated water discharged from the separation membrane subunit 11c exits through the water discharge line B (12c) and then the main water discharge line 14. If the discharged water has sufficient pressure energy, the main water discharge line 14 can communicate with the energy recovery unit 15, where necessary.

In the method for producing fresh water of the present invention, the separation membrane subunits that constitute the first system and the second system (i.e., the separation membrane subunit group (N) constituted by part of the separation membrane subunits and the separation membrane subunit group (M) constituted by the remaining separation membrane subunit(s)) can be selected and changed as needed, by switching the raw water supply valves W, the water discharge valves X, the first raw water communication valves Y, and the second raw water communication valves Z. In particular, the separation membrane subunits that function as the first system and the second system can be switched by operating the valves as illustrated in Table 1, in addition to the above-mentioned condition for producing fresh water (operation mode). In the present invention, water-to-be-treated (intermediate concentrated water) flows through the separation membrane subunits of the second system in the opposite direction to the flow of water-to-be-treated (raw water) through the separation membrane subunits of the first system. Thus, reversal of the flow direction of water-to-be-treated allows efficiently removal of foulants depositing on the end surface of the separation membrane elements, channel materials, the surface of the separation membranes, and the like in the separation membrane subunits of the second system.

**Table 1**

| Operation Mode | First System | Second System | Opened Valves | Closed Valves |
|---|---|---|---|---|
| 1 | 11a, 11b | 11c | W:10a,10b X:13c Y:17c Z:20a,20b | W:10c X:13a,13b Y:17a, 17b Z:20c |
| 2 | 11b, 11c | 11a | W:10b,10c X:13a Y:17a Z:20b,20c | W:10a X:13b,13c Y:17b,17c Z:20a |
| 3 | 11a, 11c | 11b | W:10a,10c X:13b Y:17b Z:20a,20c | W:10b X:13a,13c Y:17a,17c Z:20b |
| 4 | 11a | 11b,11c | W:10a X:13b,13c Y:17b,17c Z:20a | W:10b,10c X:13a Y:17a Z:20b,20c |
| 5 | 11b | 11a,11c | W:10b X:13a,13c Y:17a,17c Z:20b | W:10a,10c X:13b Y: 17b Z:20a,20c |
| 6 | 11c | 11a,11b | W:10c X:13a,13b Y:17a,17b Z:20c | W:10a,10b X:13c Y:17c Z:20a,20b |

To switch the unit between the operation modes illustrated in Table 1, a separation membrane subunit that has constituted the second system is first detached from the treatment system, and then the subunit is reset as the first system. Next, a separation membrane subunit that has constituted the first system is shutdown, and then the subunit is restarted as the second system, thereby finishing the switching.

In switching as described above, the order, execution time, and the like can be determined as needed. However, water-to-be-treated that flows through a separation membrane subunit of the first system has a higher flow rate compared with water-to-be-treated that flows through a separation membrane subunit of the second system, and thus the number of separation membrane subunits that constitute the first system is preferably larger than the number of separation membrane subunits that constitute the second system. In particular, it is preferred to change the operation modes 1-3 in sequence as illustrated in Table 1. Furthermore, in addition to the modes 1-3, use of the modes 4-6 for a short period allows variety to be given to the flow rate of water passing through the separation membrane subunits, which is a preferred embodiment.

Although Fig. 1 illustrates a case in which the unit includes three separation membrane subunits, the unit may include three to any number of separation membrane subunits, without limitation. Although the number can be determined as needed, depending on the flow rates, properties of the separation membranes, and the operation conditions, when operating the device, the number of separation membrane subunits of the first system is preferably larger than the number of separation membrane subunits of the second system, as described above. In other words, the total membrane area of separation membranes that constitute the separation membrane subunit group (M) of the second system is smaller than the total membrane area of separation membranes that constitute the separation membrane subunit group (N) of the first system.

The separation membrane subunits applicable to the present invention include, but not limited to, a microfiltration membrane, an ultrafiltration membrane, a nanofiltration membrane, a reverse osmosis membrane, a filtration fabric, and the like. The membranes may also have any configurations such as a hollow fiber configuration and a flat sheet configuration. The separation membrane elements in a membrane module may be arranged vertically or horizontally, and the configuration of the elements can also be selected as desired, including a hollow fiber membrane configuration, a plate-and-frame configuration, a pleated configuration, and a spiral-wound configuration. Especially, in the spiral-wound configuration, a separation membrane is wound in a swiss-roll fashion, which is particularly suitable for the present invention. One or more of these separation membrane module configurations, and one or more of the modules can constitute a separation membrane subunit.

In the case of a spiral-wound module, a spiral-wound membrane element illustrated by the partial cut-away perspective view of Fig. 2 is disposed in a pressure vessel. The spiral-wound separation membrane element 33 includes a laminate of a separation membrane 24, a feed side channel material 26, and a permeate side channel material 25, the laminate being wound in a spiral around a perforated center tube 27, wherein an anti-telescoping plate 28 is attached to the both ends of the wound laminate. The edges of the separation membrane 24 are sealed to ensure that water-to-be-treated (raw water) 29a and permeate water 30a do not mix with each other.

The separation membrane 24 is a flat-sheet separation membrane, and a reverse osmosis membrane, an ultrafiltration membrane, a microfiltration membrane, a gas separation membrane, a degassing membrane, and the like can be used. For the feed side channel material 26, a net material, a mesh material, a grooved sheet, a corrugated sheet, and the like can be used. For the permeate side channel material 25, a net material, a mesh material, a grooved sheet, a corrugated sheet, and the like can be used. Either of the channel materials may be a net or sheet that is independent of the separation membrane, or integrated into the membrane by adhesive bonding, fusion bonding, or the like.

The anti-telescoping plate 28 is a plate that is attached in order to prevent the wound laminate from being deformed into a cylindrical shape due to pressure of the passing water (telescoping), and that has holes. Preferably, the plate has, at the outer side, an annular groove into which a sealing material is fit. The anti-telescoping plate 28 may have any material quality, as long as the plate has a function to prevent the deformation. However, if chemical resistance, thermal resistance, and/or the like are required depending on the application, the material quality can be selected as desired to meet the required specification. In general, resin materials such as thermoplastic resin, thermosetting resin, and thermally stable resin materials are suitable. And the anti-telescoping plate 28 preferably has a spoke configuration that includes an external annular portion, an inner annular portion, and a radial spoke portion, in order to maintain the strength while minimizing interruption of the flow of raw water.

The center tube 27 has a plurality of holes in a side of the tube. Although the center tube 27 may be made from any material such as resin and metal, plastics such as modified polyphenylene ether resin and ABS resin are generally used, in view of cost and durability.

Suitably, adhesive bonding is used to seal the edges of the separation membrane 24. Any known adhesives can be used, including urethane adhesives, epoxy adhesives, hot-melt adhesives, and the like.

Preferably, the spiral-wound membrane element is configured so that the outer surface of the wound laminate is constrained by a cladding to prevent increase in the diameter. The cladding is made from a sheet of polyester, polypropylene, polyethylene, polyvinyl chloride, or the like, glass fibers coated with curable resin, or the like. The outer surface of the wound laminate is surrounded and constrained by such sheet or fibers to prevent increase in the diameter of the separation membrane element.

One or more of the spiral-wound separation membrane elements 33 as illustrated in Fig. 2 are disposed in a cylindrical pressure vessel 40 to form a separation membrane module 57, as illustrated by the cross-sectional view of Fig. 3. In Fig. 3, 33a-33f correspond to the separation membrane element illustrated in Fig. 2. Water-to-be-treated (raw water) is fed from an inlet 32 (34 when the flow direction is reversed) of water-to-be-treated and then fed at an end of the first separation membrane element 33a. Then the concentrated water produced by the first separation membrane element is fed to the second separation membrane element 33b, and then fed sequentially to the elements 33c, 33d, 33e, and 33f. After treatment, the water finally exits from a concentrated water outlet 34 (32 when the flow direction is reversed). The center tube of each of the separation membrane elements 33a-33f is connected to each other via a connectors 35, or connected to a permeate water outlet 37a or 37b at an end plate 36a or 36b respectively to collect, outside the device, a permeate water produced by each of the separation membrane elements.

Although the inlet 32 (34 when the flow direction is reversed) of water-to-be-treated and the concentrated water outlet 34 (32 when the flow direction is reversed) are disposed at the end plates 36a and 36b in Fig. 3, they may be disposed adjacent to the end plates of a pressure vessel body 38 (i.e., the inlet 32 of water-to-be-treated may be disposed between the end plate 36a and the first separation membrane element 33a, and the concentrated water outlet 34 may be disposed between the end plate 36b and the last separation membrane element 33f).

Each of the separation membrane elements 33a-33f includes a raw water sealing material 39a1, 39a2, 39b1-39e2, 39f1, and 39f2 respectively, at each of the anti-telescoping plates 28 to isolate water-to-be-treated from concentrated water in each of the separation membrane element. Although a raw water sealing material is disposed on the both sides of each of the separation membrane elements 33a-33f in Fig. 3, a raw water sealing material may be disposed on one side (i.e., only 39a1-39f1 or 39a2-39f2). Although a separation membrane element that includes a sealing material on the both sides provides better sealing, such element is more difficult to insert and remove and tends to generate dead space between sealing materials (for example, between 39a1 and 39a2), so such configuration is not preferred if, for example, contamination of the concentrate water is undesirable in the case of concentration of juice and the like.

In the present invention, the inlet for water-to-be-treated of the separation membrane subunit switches between the reference numerals 32 and 34, and thus the sealing materials preferably have a structure that can reverse the flow direction of water-to-be-treated, without problems. In general, water-to-be-treated is fed in a single direction, and thus U-coupling seals and V-coupling seals have been devised and widely used as a sealing material. The U-coupling seals use elastomeric resin and are installed in an anti-telescoping plate of a separation membrane element, with their open portion of the U-shape oriented toward the side at which water-to-be-treated is fed (raw water side). Such U-cup seals are configured so that their open portion expands due to water pressure when water is fed at the raw water side to seal the gap between the U-cup seal and a pressure vessel. The V-coupling seals have the similar configuration.

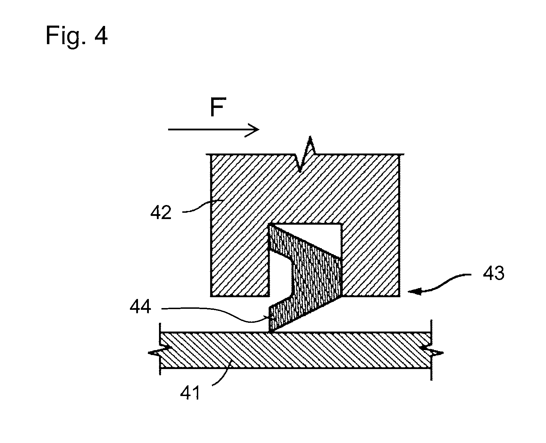

Fig. 4 is a schematic enlarged cross-sectional view of the area near the installed section of a U-cup seal when a separation membrane element is disposed in a pressure vessel and the U-cup seal 44 sits in an annular groove in a perimeter 42 of an anti-telescoping plate to form a seal between the outer peripheral surface 43 of the anti-telescoping plate and an inner wall 41 of the cylindrical pressure vessel. In Fig. 4, although the U-cup seal 44 has a relatively small contact area with an inner wall 41 of the pressure vessel, the seal 44 forms a seal against water that flows from the upstream to the downstream of water-to-be-treated (raw water) (from the left to the right in Fig. 4 as indicated by an arrow F) as described above. When the separation membrane element is moved within the pressure vessel, the element can be moved with a relatively small resistance by sliding the element from the left to the right in Fig. 4. However, it is difficult to move the separation membrane element from the right to the left. In the present invention, water-to-be-treated must be capable of being fed at either side, and thus the U-cup seals and V-cup seals are less suitable.

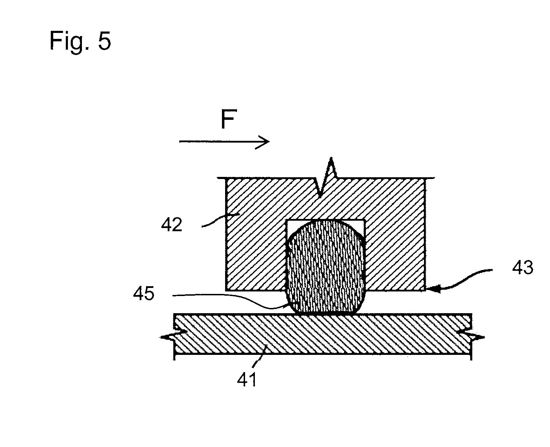

On the other hand, an O-ring seal of a conventional art may be used. The O-ring seal that sits in an annular groove in a perimeter of an anti-telescoping plate is contacted with the inner wall of the pressure vessel, and then crushes and deforms, thereby sealing the gap between the separation membrane element and the pressure vessel. Thus the O-ring seal can form a good seal against water-to-be-treated fed at either side. Fig. 5 is a schematic partial enlarged cross-sectional view of the area near the installed section of an O-ring seal when a separation membrane element is disposed in a pressure vessel and the O-ring seal 45 sits in an annular groove in a perimeter 42 of an anti-telescoping plate 28 to form a seal between the outer peripheral surface 43 of the anti-telescoping plate and the inner wall 41 of the pressure vessel. In Fig. 5, the O-ring seal 45 deforms in the region in which the seal 45 is pressed against the inner wall 41 of the pressure vessel, and thus has a larger contact area with the inner wall 41 of the pressure vessel. Furthermore, because the O-ring seal 45 is made from elastomeric resin, the seal 45 has strong sliding friction with the inner wall 41 of the pressure vessel, and thus have a drawback in that the separation membrane element is difficult to move within the pressure vessel.

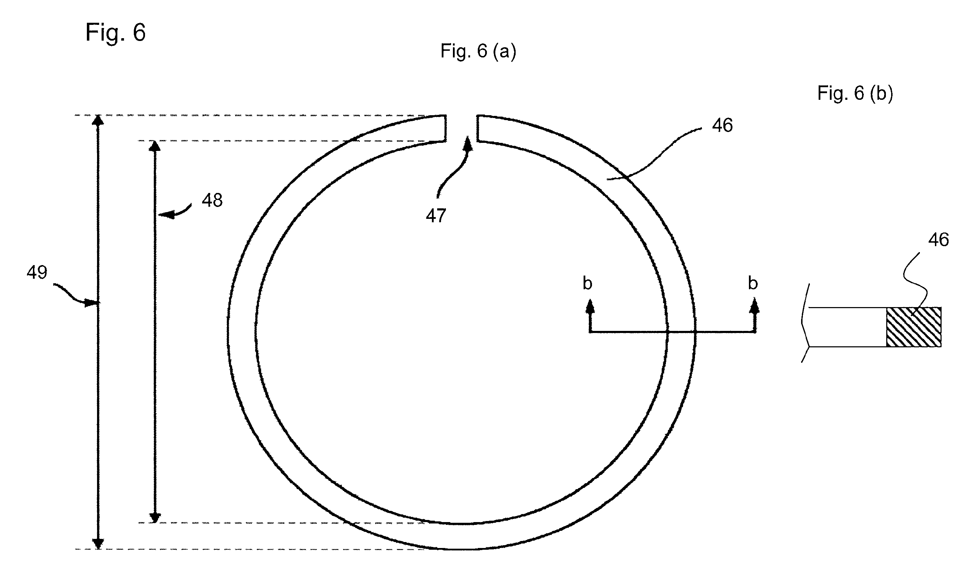

To overcome the drawbacks of the O-ring seals and the U-cup seals, it is preferred to use, for example, a sealing material in the form of a split ring (hereinafter sometimes referred to as "split ring seal") as illustrated in Fig. 6. The split ring seal 46 is described in WO2011/046944. The split ring seal 46 has a form like an annular seal being cut and split at one or more points. For example, as illustrated in Fig. 6 (a) (plan view), the split ring seal preferably includes a single gap, but two semicircular split ring seals that together form an annular seal being cut and split at two points may be used. The transverse cross-sectional shape of the split ring seal may be, without limitation, any structure that can sit in an annular groove in the perimeter of the anti-telescoping plate 28 so that the seal is not moved, including, for example, a substantially rectangular shape as illustrated in Fig. 6 (b) (a cross-sectional view taken along the line b-b in Fig. 6 (a)) and a substantially polygonal shape. The split ring seal is designed to have a length of the external perimeter (perimeter length) so that the outer diameter 49 of an annulus formed by closing the gap 47 in the split ring seal 46 is slightly longer than the diameter of the inner wall of the pressure vessel. Practically, the split ring seal is designed to decrease the gap, thereby obtaining a tight fit between the split ring seal and the inner wall of the pressure vessel, when the ring seal is installed in the anti-telescoping plate of the separation membrane element and the element is disposed in the pressure vessel. The length of the internal perimeter (internal perimeter length) of the split ring seal may be designed to fit in the annular groove in the perimeter of the anti-telescoping plate when an annulus is formed by closing the gap 47 in the split ring seal 46. Although the size of the split ring seal 46 may be optimized based on the outer diameter of the element and the materials, the seal may have, for example, a radial width (i.e., half of the difference between the outer diameter 49 and the inner diameter 48) of about 5-10 mm, and a seal thickness of about 3-10 mm.

Such split ring seal 46 has a rectangular cross-sectional shape as illustrated in Fig. 6 (b), and thus the sliding surface and the sealing material can be contacted in parallel or symmetrically in either direction, thereby allowing feed of water-to-be-treated at either side (32 and 34) of the separation membrane module 57 and allowing easy movement of the separation membrane element within the pressure vessel, both when the spiral-wound membrane element is inserted into a cylindrical pressure vessel and when the separation membrane element is removed from the pressure vessel.

A raw water sealing material applicable to the present invention can have properties capable of forming a sufficient seal against water-to-be-treated fed at either side of the separation membrane element. The sealing material that has such properties can have a split ring form as described above, a delta ring form having a pointed seal-contact surface, i.e., having, for example, a triangular cross section, a form having a convex lens cross section rather than an O-cross section, or a corrugated form having a contact surface with ridges and grooves. An O-ring form may also be applied, although such form has a slidability problem. In the case of the O-ring or delta ring form, use of an elastomeric sealing material provides improved sealability, which is thus preferred, but precautions must be taken because such sealing material tends to exhibit reduced slidability. To stress the slidability, it is important to decrease the squeeze (the amount an O-ring or the like made from an elastomeric material is compressed and deformed during use in order to provide closer contact), which is typically considered in an elastomeric seal material. In particular, if the O-ring has a squeeze of 10% or less and more preferably 5% or less, the squeeze being usually 8-30%, the ring can exhibit good slidability in a pressure vessel, but precautions must be taken in application because good precision is required.

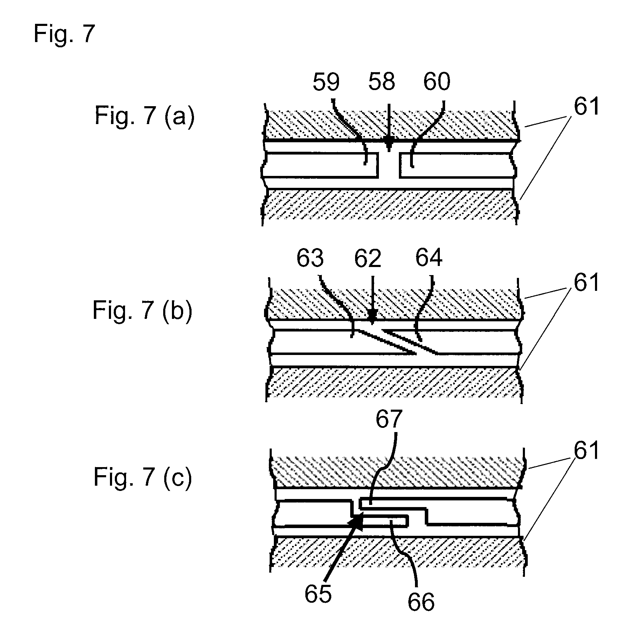

The form of the gap in the split ring seal is not particularly limited, and by way of examples, as illustrated in Fig. 7, the gap includes a gap disposed perpendicular to a longitudinal direction of a seal (Fig. 7 (a)), a gap disposed at an angle relative to a longitudinal direction of a seal (Fig. 7 (b)), and a gap disposed in a stepped configuration relative to a longitudinal direction of a seal (Fig. 7 (c)).

Especially, when using a spring seal that includes a gap disposed at an angle relative to a longitudinal direction of a seal (Fig. 7 (b)) or a gap disposed in a stepped configuration to a longitudinal direction of a seal (Fig. 7 (c)), pressure that is generated when water-to-be-treated actually flows through the pressure vessel butts the ends of the split ring together to substantially close the gap at the ends of the split ring. As a result, sealing effect is substantially maintained even at the joint between the ends, and very little water-to-be-treated bypasses out of the separation membrane element, thereby allowing efficient water treatment.

After the split ring seal is installed in the perimeter of the anti-telescoping plate of the separation membrane element, the ends of the seal may be simply contacted, or the ends may be bonded. A method for the bonding may includes thermal fusion bonding, strong bonding by an adhesive, or joining of the ends of the split ring seal by concave-convex mating. The joining of the ends of the split ring by concave-convex mating allows the split ring seal to be prevented from removing due to shock in handling.

When a split ring seal is installed in the perimeter of the anti-telescoping plate, one or more sealing materials may be disposed. If a plurality of sealing materials are disposed, it is preferred to dispose the gaps in different positions, thereby allowing further reduce the amount of raw water that flows out of the separation membrane element.

A material that constitutes the split ring may be non-elastomeric or elastomeric, and it is preferred to use a non-elastomeric material. Organic materials that can be used to constitute the non-elastomeric material include various rigid plastics such as polytetrafluoroethylene, polyvinylidene fluoride, polyethylene, and polypropylene. Inorganic materials that can be used include iron, stainless steel, copper, aluminum, and titanium, and alloys thereof, as well as ceramic, graphite, and asbestos. And organic-inorganic composites such as FRP and multilayer stacks of the materials described above can also be used.

The elastomeric material is not particularly limited, and a seal material that is widely used can be employed, including nitrile rubber, styrene-butadiene rubber, silicone rubber, fluororubber, acrylic rubber, ethylene-propylene rubber, and urethane rubber.

Note that these materials preferably have resistance to water-to-be-treated for which a separation membrane module is intended. For example, if the module is intended for seawater, a seal made from an iron alloy tends to corrode, and thus precautions must be taken.

Thus, the object of the present invention can be achieved by using a sealing material as illustrated in Fig. 6 (a), especially a sealing material in the form of a split ring, as each of the raw water sealing materials 39a1-39f1 and 39a2-39f2. And, if a U-cup seal ring or a V-cup seal ring is combined with a split ring seal, the separation membrane element is moved only in a single direction, but a more secure seal can be provided, which is thus a preferred embodiment.

The valves applied to the present invention are not particularly limited, and butterfly valves, gate valves, globe valves, ball valves, and the like can be selected as desired. The valves are required to control flow, and thus the butterfly valves and the globe valves are suitable. The valves preferably include a pneumatic positioner.

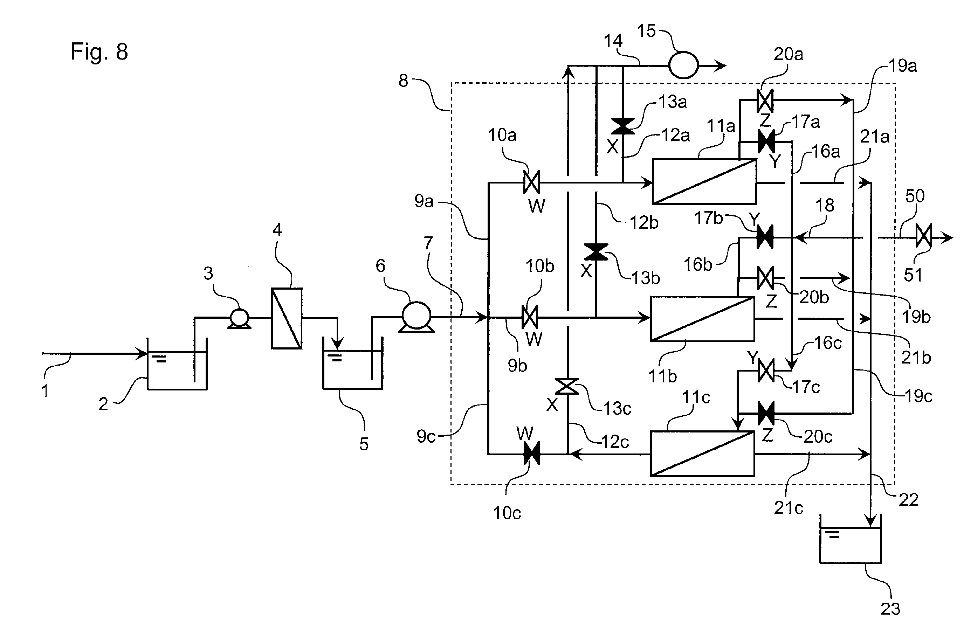

In the implementation of the present invention, in order to prevent damage to the piping and the separation membrane subunits resulting from water hammer due to slightly unmatched timing of the change when the feed direction of the separation membrane subunit is changed during operation, it is preferred to provide a discharge line 50 for discharging the intermediate concentrated water from the device through the raw water line C and/or the raw water line D, as illustrated in Fig. 8, and to open an intermediate concentrated water discharge valve 51 for a short period when the flow direction is changed.

Such embodiment will be specifically described with reference to Fig. 8. For a separation membrane subunit 11c that is operating as the second system, if a raw water communication valve Y (17c) and a water discharge valve X (13c) are completely closed, the separation membrane subunit 11 c is separated from the second system. On the other hand, the separation membrane subunits 11 a and 11b of the first system are still in operation, and thus if the raw water communication valve Y (17c) was completely closed, the intermediate concentrated water would not be discharged from the separation membrane subunit 11a and 11b, and then dead-end filtration would takes place, with the result that the pressure at the raw water side would exceed a set pressure and then the unit would be out of service. Thus, the raw water communication valve Y (17c) connected to the separation membrane subunit 11 c is gradually closed, while controlling the flow rate by the intermediate concentrated water discharge valve 51 and discharging the intermediate concentrated water from the device through an intermediate concentrated water discharge line 50, in order to keep the amount of the concentrated water in the first system within a predetermined range. This allows the separation membrane units 11a and 11b of the first system to continuously operate without problems, even if the raw water communication valve Y (17c) is completely closed, and then the water discharge valve X (13c) is completely closed to separate the separation membrane subunit 11c from the second system.

Next, the separation membrane subunit 11c is to be restarted as a separation membrane subunit of the first system. To achieve this, the raw water communication valve Z (20c) connected to the separation membrane subunit 11c is opened, and the raw water supply valve W (10c) is gradually opened. Then one of the subunits that has operated as the first system is separated from the first system. In an embodiment in which the separation membrane subunit 11 a is separated, the raw water supply valve W (10a) connected to the separation membrane subunit 11a is gradually closed, and after the valve W (10a) is completely closed, the raw water communication valve Z (20a) is completely closed. In this case, although three separation membrane subunits are temporarily configured to constitute the first system, and thus the amount of the raw water fed to the separation membrane subunits can be unbalanced, there is no problem if the pressure pump 6 is controlled by an inverter, or if the flow rate of the raw water is controlled by adjusting the degree of openness of the raw water supply valves X (10a, 10b, and 10c). Even in the temporary configuration, the flow rate of the concentrated water in the first system is controlled by the intermediate concentrated water discharge valve 51, and thus the concentrated water has a constant flow rate.

Finally, the separation membrane subunit 11a that has separated from the first system is to be restarted as the second system. To achieve this, the water discharge valve X (13a) connected to the separation membrane subunit 11a is opened, and the raw water communication valve Y (17a) is gradually opened. This allows the concentrated water in the first system is fed to the separation membrane subunit 11a as the second system, and the amount of the concentrated water is increased. Thus, the intermediate concentrated water discharge valve 51 for controlling the flow rate is gradually closed. Once the raw water communication valve Y (17a) is completely opened, the intermediate concentrated water discharge valve 51 is completely closed to complete the switching.

The configuration described above allows the separation membrane subunits to be switched while operating the device.

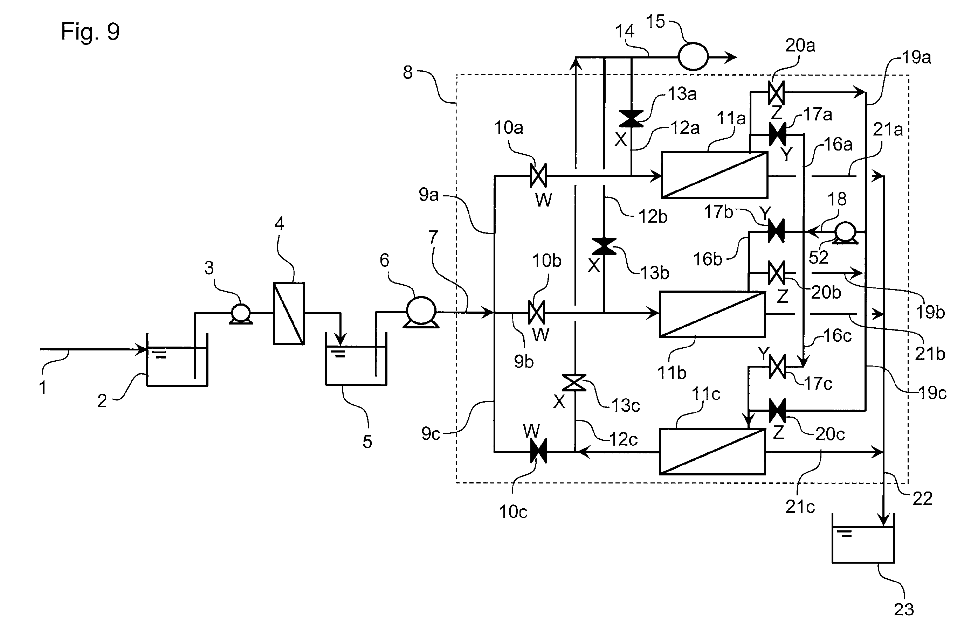

In the present invention, concentrated water produced by the separation membrane subunit group (N) (first system) constituted by part of the separation membrane subunits is fed to the separation membrane subunit group (M) (second system) constituted by the remaining subunit(s), and thus the pressure may drop in the separation membrane subunits of the second system, and/or a higher feed pressure may be required due to the increase in the concentration of the intermediate concentrated water to be treated by the second system. In this case, as illustrated in Fig. 9, a collection line 18 in communication with the raw water line C and the raw water line D can include an intermediate pressure pump 52. In this case, the intermediate concentrated water discharge line 50 and the intermediate concentrated water discharge valve 51 may be included at one side of the intermediate pressure pump 52, or both sides of the intermediate pressure pump 52 to further reduce water hammer to the intermediate pressure pump.

It is also preferred to include a pressure energy recovery unit 15 in the main water discharge line 14, if the water discharge line B has pressure energy. In this case, the energy recovery unit 15 is not particularly limited, and can be selected as desired, including a reverse pump, a Pelton wheel, a pressure exchange pump, a turbocharger, and the like.

Although the water-to-be-treated (raw water) to which the present invention is applicable can include, but not limited to, various water-to-be-treated such as river water, seawater, sewage treatment water, rainwater, industrial water, industrial wastewater, and the like, the present invention is suitable for dense fluid, especially seawater, that significantly changes operation conditions and separation performance of the separation membranes depending on the variation of the density of raw water.

### Industrial Applicability

In the present invention, separation membrane elements constitute subunits; the concentrated water produced by a subunit group constituted by part of the subunits is fed to the other subunit group constituted by the remaining subunit(s) with reversing the flow direction; and the separation membrane elements in the front, as described above, can be sequentially changed, and then the flow direction of water through the separation membrane elements in the rear can be reversed, with no or little downtime, thereby allowing the use of the separation membranes to be balanced and allowing effective prevention of fouling while maintaining a high operation rate.

### Description of the Reference Numeral

1: raw water
2: raw water tank
3: raw water feed pump
4: pretreatment unit
5: pretreated water tank
6: pressure pump
7: main raw water line
8: separation membrane unit
9a, 9b, 9c: raw water line A
10a, 10b, 10c: raw water supply valve W
11a, 11b, 11c: separation membrane subunit
12a, 12b, 12c: water discharge line B
13a, 13b, 13c: water discharge valve X
14: main water discharge line
15: pressure energy recovery unit
16a, 16b, 16c: raw water line C
17a, 17b, 17c: first raw water communication valve Y
18: collection line
19a, 19b, 19c: raw water line D
20a, 20b, 20c: second raw water communication valve Z
21 a, 21b, 21 c: permeate water line E
22: main permeate water line
23: permeate water tank
24: separation membrane
25: permeate side channel material
26: feed side channel material
27: center tube
28: anti-telescoping plate
29, 29a: water-to-be-treated (raw water)
30, 30a: permeate water
31: concentrated water
32: inlet for water-to-be-treated (raw water)
33a, 33b, 33c, 33d, 33e, 33f separation membrane element
34: concentrated water outlet
35: connector
36a, 36b: end plate
37a, 37b: permeate water outlet
38: pressure vessel body
39a1, 39b1, 39c1, 39d1, 39e1, 39f1: raw water sealing material
39a2, 39b2, 39c2, 39d2, 39e2, 39f2: raw water sealing material
40: cylindrical pressure vessel
41: inner wall of cylindrical pressure vessel
42: perimeter of anti-telescoping plate
43: outer peripheral surface of anti-telescoping plate
44: U-cup seal
45: O-ring seal
46: non-elastomeric sealing material in the form of a split ring
47: gap in non-elastomeric sealing material in the form of a split ring
48: inner diameter of non-elastomeric sealing material in the form of a split ring
49: outer diameter of non-elastomeric sealing material in the form of a split ring
50: intermediate concentrated water discharge line
51: intermediate concentrated water discharge valve
52: intermediate pressure pump
53: water-to-be-treated
54: permeate water
55: concentrated water
56: valve
57: separation membrane module
58: square gap
59, 60: sealing material adjacent to square gap
61: end of circumferential groove in anti-telescoping plate
62: angled gap
63, 64: sealing material adjacent to angled gap
65: step gap
66, 67: sealing material adjacent to step gap

## Claims

1. A separation membrane unit comprising a plurality of separation membrane subunits that comprise at least one separation membrane module comprising a plurality of separation membrane elements disposed in a cylindrical pressure vessel, wherein each of the separation membrane subunits communicates with a raw water line A that comprises a raw water supply valve W, a water discharge line B that comprises a water discharge valve X, a raw water line C that comprises a first raw water communication valve Y, a raw water line D that comprises a second raw water communication valve Z, and a permeate water line E, and wherein, for each of the separation membrane subunits, the raw water line A communicates with the water discharge line B, the raw water line C communicates with the raw water line D, the raw water line A communicates with a main raw water line, the water discharge line B communicates with a main water discharge line, the raw water line C and the raw water line D communicate with a collection line, and the permeate water line E communicates with a main permeate water line.

2. The separation membrane unit according to claim 1, wherein the separation membrane elements are a spiral-wound membrane element in which a cladding is wrapped around the outer surface of a wound laminate formed by winding a separation membrane together with a channel spacer, and in which an anti-telescoping plate is attached to at least one end of the wound laminate and the cladding, in which a raw water sealing material is disposed in the perimeter of at least one of the anti-telescoping plate to allow movement of the separation membrane element within the cylindrical pressure vessel substantially in either direction.

3. The separation membrane unit according to claim 1 or 2, wherein the unit further comprises a line for discharging water that has passed through the raw water line C from the unit and/or for discharging water that has passed through the raw water line D from the unit.

4. The separation membrane unit according to any of claims 1-3, wherein the collection line in communication with the raw water line C and the raw water line D comprises a pressure pump.

5. The separation membrane unit according to any of claims 1-4, wherein the main water discharge line comprises a pressure energy recovery unit.

6. A method for producing fresh water by using the separation membrane unit according to any of claims 1-5 to produce permeate water, wherein, for a separation membrane subunit group (M) that is constituted by part of the plurality of separation membrane subunits, the raw water supply valve W and the second raw water communication valve Z are completely closed, and the water discharge valve X and the first raw water communication valve Y are opened, and, for a separation membrane subunit group (N) that is constituted by the remaining subunit(s), the raw water supply valve W and the second raw water communication valve Z are opened, and the water discharge valve X and the first raw water communication valve Y are completely closed to feed raw water to the separation membrane subunit group (N) through the main raw water line and the raw water line A connected to the separation membrane subunit (N), wherein the permeate water is discharged through the permeate water line E connected to the separation membrane subunit group (N) and the main permeate water line, wherein an intermediate concentrated water is discharged through the raw water line D connected to the separation membrane subunit (N), and then the intermediate concentrated water is fed to the separation membrane subunit group (M) through the collection line and the raw water line C connected to the separation membrane subunit group (M), wherein the permeate water is discharged through the permeate water line E connected to the separation membrane subunit group (M) and the main permeate water line, and wherein the concentrated water is discharged through the water discharge line B connected to the separation membrane subunit group (M) and the main water discharge line.

7. The method for producing fresh water according to claim 6, wherein a separation membrane subunit that constitutes the separation membrane subunit group (N) is sequentially changed among the plurality of the separation membrane subunits.

8. The method for producing fresh water according to claim 6 or 7, wherein the total membrane area of separation membranes in the separation membrane subunit group (M) is smaller than the total membrane area of separation membranes in the separation membrane subunit group (N).
